(19) Europäisches Patentamt

European Patent Office

Office européen des brevets

(11) Veröffentlichungsnummer: **0 232 780 B1**

(12) **EUROPÄISCHE PATENTSCHRIFT**

(45) Veröffentlichungstag der Patentschrift: 14.08.91

(51) Int. Cl.5: **A21D 13/02**

(21) Anmeldenummer: 87100999.9

(22) Anmeldetag: 24.01.87

(54) **Weizenvollkornmehl, Verfahren zu dessen Herstellung und dessen Verwendung.**

(30) Priorität: 01.02.86 DE 3603086

(43) Veröffentlichungstag der Anmeldung:
19.08.87 Patentblatt 87/34

(45) Bekanntmachung des Hinweises auf die
Patenterteilung:
14.08.91 Patentblatt 91/33

(84) Benannte Vertragsstaaten:
AT BE CH DE ES FR GB IT LI LU NL SE

(56) Entgegenhaltungen:
GB-A- 2 005 982

GETREIDE, MEHL UND BROT, 1985, Seiten
1-12; H. ZWINGELBERG et al.: "Vollkornmehle
aus Weizen und Roggen - Zusammenhänge
zwischen Vermahlung, Korngrössenverteilung und Backergebnis"

(73) Patentinhaber: B. Wendeln jr. GmbH
Auf'm Halskamp 11
W-4594 Garrel Oldenburg(DE)

(72) Erfinder: Die Erfinder haben auf ihre Nennung verzichtet

(74) Vertreter: UEXKÜLL & STOLBERG Patentanwälte
Beselerstrasse 4
W-2000 Hamburg 52(DE)

**Beschreibung**

Die Erfindung betrifft Weizenvollkornmehl aus Mehlanteilen mit einer im wesentlichen üblichen Typenmehlen entsprechenden Beschaffenheit und Grobanteilen, ein Verfahren zur Herstellung von derartigem Weizenvollkornmehl und die Verwendung von derartigem Weizenvollkornmehl.

Auf dem Gebiet der Backwaren erfreuen sich Vollkornprodukte zunehmender Beliebtheit. Dementsprechend besteht großes Interesse an der Herstellung und Verarbeitung geeigneter Vollkornmehle und Vollkornschrote. Definitionsgemäß müssen Vollkornmehle und Vollkornschrote die gesamten Bestandteile der gereinigten Körner einschließlich des Keimlings enthalten. Die Körner können vor der Verarbeitung von Teilen der äußeren Fruchtschale befreit werden.

Während Roggenvollkornmehle bzw. -schrote schon eine erhebliche Bedeutung erlangt haben, ist der Anteil von Weizenvollkornmehlen bei der Herstellung von Brot und anderen Backwaren aus verschiedenen Gründen ziemlich gering geblieben. Um diese Situation zu verbessern, sind in den letzten Jahren intensive Untersuchungen und Versuchsprogramme durchgeführt worden. So wird in Getreide, Mehl und Brot, 1985, Seiten 3 bis 12 auf Basis der Ergebnisse von umfangreichen Untersuchungen vorgeschlagen, Weizenvollkornmehle in der Weise herzustellen, daß man den Weizen in herkömmlicher Weise, vorzugsweise auf Walzenstühlen, vermahlt, die dabei anfallende grobe Schale weiter zerkleinert und schließlich das erhaltene Mehl mit der weiter zerkleinerten Schale zusammenführt. Dabei wird so vorgegangen, daß nach der ersten Schrotpassage Kleie bzw. Kleie-/Mehlfraktionen abgetrennt werden, die in der Korngröße noch weit über 2000 µm liegen. Diese Fraktionen werden dann getrennt zerkleinert. Wenngleich konkrete Angaben zur Teilchengröße nach erfolgter Zerkleinerung der Grobanteile fehlen, so ergibt sich doch aus dem Gesamtzusammenhang und den angegebenen Siebanalysen für die Weizenvollkornprodukte, daß die Grobanteile zu einem sehr feinteiligen Produkt zerkleinert werden. Folgerichtig wird auch in Tabelle 20 auf Seite 12 empfohlen, daß das fertige Vollkornmehl nur 1 bis 0% Teilchen, die von einem Sieb mit einer Maschenweite von 540 µm zurückgehalten werden, enthalten soll. Auch die Rückstände auf Sieben mit Maschenweiten von 400 und 250 µm sind verhältnismäßig gering. 65 bis 80% sollen sogar ein Sieb mit einer Maschenweite von 150 µm passieren. Ganz grob wird empfohlen, daß der Rückhalt auf einem 250 µm Sieb 20% und der Rückhalt auf einem 540 µm Sieb 0% betragen soll. Außerdem wird ausdrücklich darauf hingewiesen, daß an der Schale anhaftende Mehlkörperanteile vor der Zerkleinerung der Schale abgetrennt werden sollen. Der Stärkegehalt der Schale schwankt allerdings immer noch zwischen 15 und 35%.

Toastbrot wird heute aus hochwertigen Weizenmehlen hergestellt und muß erheblichen Qualitätsanforderungen genügen (siehe z.B. Neue Technologien in BBV Backwaren Handbuch 2, 1980, Seiten 160 bis 165). Allerdings war es bislang kaum üblich, Toastbrot aus Weizenvollkornmehl herzustellen, da bei Verwendung bekannter Weizenvollkornmehle grundsätzlich Volumeneinbußen hingenommen werden mußten und außerdem, was insbesondere bei Toastbrot unerwünscht ist, eine sehr dunkle Krumenfarbe auftrat. Zusätzlich war zu beobachten, daß die Schalenteile an der Oberfläche der Toastscheiben deutlich spürbar waren. Für diese Weizenvollkorntoastbrote wurde bisher eine Weizenmischung müllerisch so bearbeitet, daß sie insgesamt so fein wie möglich zerkleinert wurde, um als Voraussetzung für eine gute Volumenausbildung eine große Oberfläche zu schaffen (siehe auch die oben genannte Literaturstelle Getreide, Mehl und Brot, wonach voll durchgemahlene Vollkornmehle mit Typenmehlen vergleichbare Backergebnisse liefern). Der Feinheitsgrad dieser Schrote konnte aber nur begrenzt herabgesetzt werden, da bei diesen Mahlvorgängen die Schalenteile immer mit zerkleinert wurden und mit jeder weiteren Zerkleinerungsstufe eine dunklere Farbe im Gesamtmehl vorlag. Während das spezifische Volumen bei einem handelsüblichen Toastbrot für 100 g Brot ca. 400 ml beträgt, ist ein derartiges Volumen beim Einsatz von durchgemahlenem Weizenvollkornmehl nie erreicht worden.

Bekannt ist auch ballaststoffangereichertes Weizentoastbrot (siehe Neue Technologien in BBV Backwaren Handbuch 2, Seite 164). In der Rezeptur für derartige Weizentoastbrote sollen mindestens 10 Teile Weizenspeisekleie auf 100 Teile Weizenmehl enthalten sein. Über die Beschaffenheit und insbesondere die Feinheit der zu verwendenden Weizenspeisekleie werden allerdings keine Angaben gemacht. Wie jedoch die Abbildung 2 auf Seite 164 zeigt, besitzt das ballaststoffangereicherte Weizentoastbrot bereits eine ziemlich dunkle Farbe.

Angesichts der dargelegten Unzulänglichkeiten der bekannten Weizenvollkornmehle lag der vorliegenden Erfindung die Aufgabe zugrunde, ein verbessertes Weizenvollkornmehl zu liefern, das sich insbesondere für die Herstellung von Toastbrot eignet und die Einhaltung der bekannten hohen Qualitätsanforderungen an Toastbrot, insbesondere bezüglich Volumen und heller Krumenfarbe gestattet.

Zur Lösung dieser Aufgabe wird ein Weizenvollkornmehl der eingangs genannten Art vorgeschlagen, das dadurch gekennzeichnet ist, daß die Grobanteile aus Weizenschalenteilen mit anhaftenden Mehlbestandteilen, vornehmlich aus Teilen der Aleuronschicht, bestehen, 15 bis 22 Gew.% i.T. des Weizenvollkornmehles ausmachen, einen Ballaststoffgehalt von 28 bis 30,5% i.T., ein spezifisches Gewicht von 0,15 bis 0,25 g/ml und folgende Siebanalyse aufweisen:

| Maschenweite /um | % Rückstand | | |
|---|---|---|---|
| 3150 | 0 | – | 3 |
| 1700 | 35 | – | 55 |
| 1000 | 30 | – | 50 |
| 500 | 8 | – | 15 |
| 300 | 1 | – | 4 |
| 200 | 0,3 | – | 2,5 |
| 100 | 0 | – | 1. |

Gegenstand der Erfindung ist ferner ein Verfahren zur Herstellung von Weizenvollkornmehl, bei dem Weizen oder eine Weizenmischung in üblicher Weise wie bei der Herstellung eines Typenmehls vermahlen wird, anfallende Grobanteile abgetrennt werden und das erhaltene helle Mehl und die abgetrennten Grobanteile wieder zusammengeführt werden, das dadurch gekennzeichnet ist, daß man die Grobanteile zu einem solchen Zeitpunkt abtrennt, daß sie aus Weizenschalenteilen mit anhaftenden Mehlbestandteilen, vornehmlich aus den Teilen der Aleuronschicht, bestehen, einen Ballaststoffgehalt von 28 bis 30,5% i.T., ein spezifisches Gewicht von 0,15 bis 0,25 g/ml und folgende Siebanalyse aufweisen:

| Maschenweite /um | % Rückstand | | |
|---|---|---|---|
| 3150 | 0 | – | 3 |
| 1700 | 35 | – | 55 |
| 1000 | 30 | – | 50 |
| 500 | 8 | – | 15 |
| 300 | 1 | – | 4 |
| 200 | 0,3 | – | 2,5 |
| 100 | 0 | – | 1. |

Das erfindungsgemäße Weizenvollkornmehl eignet sich für die Herstellung von verschiedensten Brotsorten und anderen Backwaren. Besonders vorteilhaft ist es jedoch für die Herstellung von Toastbrot und auch von Grahambrot. Gegenstand der Erfindung ist dementsprechend auch die Verwendung des erfindungsgemäßen Weizenvollkornmehles für die Herstellung von Toast-oder Grahambrot.

Bevorzugte Ausführungsformen der Erfindung ergeben sich aus den Unteransprüchen und aus der folgenden Beschreibung.

Zur Herstellung des erfindungsgemäßen Weizenvollkornmehls wird grundsätzlich so vorgegangen, daß man in üblicher Weise eine Getreidemischung mit sehr guten Backeigenschaften zusammenstellt und diese einer Reinigung nach üblichen mühlentechnischen Gegebenheiten unterzieht. Nach dem entsprechenden Netzen und Abstehen dieser Mischung erfolgt die Vermahlung im ersten bis dritten Schrot in üblicher Form. Abweichend vom Stand der Technik werden aber dann nach dem dritten Schrot die Schalenanteile vom Mehlkern bzw. -körper getrennt. Die Mehlbestandteile (Mehle, Grieße und Dunste) werden dann über weitere Vermahlungsstufen so zerkleinert, daß sie ein helles Mehl ergeben, das einer optimalen Zerkleinerungsbehandlung unterworfen worden ist und somit die entsprechende Oberfläche aufweist, die Voraussetzung für das angestrebte Volumen des Toastbrotes von etwa 400 ml je 100 g Brot ist.

In der Endstufe der Vermahlung werden die abgetrennten Weizenschalenteile mit anhaftenden Mehlbestandteilen, vornehmlich aus den Teilen der Aleuronschicht, mit den bearbeiteten Endospermteilen des Getreides wieder zusammengemischt, so daß trotz der separaten Bearbeitungsvorgänge ein Weizenvollkornmehl mit groben Schalenteilen für die Herstellung von Toastbrot entsteht.

Der Zeitpunkt, an dem die Weizenschalenanteile vom Mehlkern abgetrennt werden, richtet sich nach der jeweiligen Vermahlungsanlage. Bei den üblichen Walzenstuhlvermahlungsanlagen hat sich gezeigt, daß je nach Einstellung der Walzenstühle und je nach Beschaffenheit der Walzen die Abtrennung der Weizenschalenanteile nach dem zweiten bis vierten und vorzugsweise nach dem dritten Schrot erfolgen muß. Die Untersuchungen im Rahmen der vorliegenden Erfindung haben gezeigt, daß der Zeitpunkt der Abtrennung der Weizenschalenanteile und damit deren Beschaffenheit von kritischer Bedeutung für die Erzielung eines hochwertigen Weizenvollkornmehles ist. Es hat sich ergeben, daß sich die Backeigenschaften des erhaltenen Weizenvollkornmehles sehr stark verschlechtern, wenn die Weizenschalenanteile nicht zum optimalen Zeitpunkt vom Mehlkern abgetrennt werden, d.h. die Weizenschalenteile nicht die erfindungsgemäß erforderlichen Eigenschaften besitzen.

Es wurde überraschend gefunden, daß die oben geschilderten Nachteile bekannter Weizenvollkornmehle dann vermieden werden, wenn die zunächst abgetrennten und später wieder mit dem Mehl vereinigten Weizenschalenteile so beschaffen sind, daß an ihnen noch verhältnismäßig viel Mehlbestandteile anhaften, vornehmlich aus den Teilen der Aleuronschicht. Der Ballaststoffgehalt der Weizenschalenteile muß im Bereich von 28 bis 30,5% und vorzugsweise 29 bis 30% i.T. liegen, wobei unter Ballaststoffgehalt der Gehalt an unlöslichen organischen Ballaststoffen bestimmt nach der NDF-Methode verstanden wird. Das spezifische Gewicht der Weizenschalenteile beträgt erfindungsgemäß 0,15 bis 0,25 g/ml und vorzugsweise 0,19 bis 0,23 g/ml. Außerdem weisen die Weizenschalenteile die oben angegebene Siebanalyse und vorzugsweise folgende Siebanalyse (noch bevorzugtere Bereiche in Klammern) auf:

| Maschenweite /um | % Rückstand | | | |
|---|---|---|---|---|
| 3150 | 0 | - 1 | ( 0,6 | - 0,9) |
| 1700 | 40 | - 50 | (44 | - 48) |
| 1000 | 35 | - 45 | (36 | - 40) |
| 500 | 9 | - 14 | (10 | - 13) |
| 300 | 1,5 | - 3,5 | ( 2 | - 3) |
| 200 | 0,5 | - 2,0 | ( 0,8 | - 1,5) |
| 100 | 0,1 | - 0,6 | ( 0,2 | - 0,4) |

Der Aschegehalt der Weizenschalenteile beträgt vorzugsweise 4 bis 5% i.T..

Der Mehlanteil im erfindungsgemäßen Weizenvollkornmehl enthält abgesehen von den abgetrennten Grobanteilen alle anderen im Laufe der Vermahlung anfallenden Fraktionen, d.h. die nach dem ersten und zweiten und gegebenenfalls auch nach dem dritten und vierten Schrot anfallenden Fraktionen wie Dunst, grobe Grieße und feine Grieße werden in üblicher Weise weiterbearbeitet und vermahlen und dann wieder ins Mehl geleitet. Bei der weiteren Zerkleinerung der groben Grieße, insbesondere dunkler Grieße, können unter Umständen noch geringe Anteile von Weizenschalenteilen ausgelöst werden. Diese werden ebenfalls nicht weiter zerkleinert, sondern mit den bereits vorher abgetrennten Weizenschalenteilen vereinigt. Erhalten wird auf diese Weise ein Mehlanteil, der hinsichtlich seiner Beschaffenheit im wesentlichen üblichen Typenmehlen entspricht. Ein typisches Merkmal des Mehlanteils im erfindungsgemäßen Weizenvollkornmehl besteht allerdings darin, daß er gegenüber einem entsprechenden Typenmehl, d.h. einem aus dem gleichen Weizen bzw. der gleichen Weizenmischung hergestellten Typenmehl, einen um mindestens 1% i.T. verringerten Eiweißgehalt aufweist. Dies liegt daran, daß an den Weizenschalenteilen nicht unerhebliche Mengen Mehlbestandteile, vornehmlich aus den Teilen der Aleuronschicht, anhaften. Das Hektolitergewicht des Mehlanteils beträgt vorzugsweise 52 bis 62 kg, während der Aschegehalt vorzugsweise im Bereich von 0,6 bis 0,8% i.T. liegt. Schließlich soll der Mehlanteil vorzugsweise folgende Siebanalyse (besonders

EP 0 232 780 B1

bevorzugte Bereiche in Klammern) aufweisen:

| Maschenweite /um | % Rückstand | |
|---|---|---|
| 1000 | 0 – 0,5 | ( 0 – 0,2) |
| 500 | 1 – 10 | ( 3 – 8) |
| 300 | 32 – 47 | (36 – 42) |
| 200 | 32 – 47 | (36 – 42) |
| 100 | 8 – 18 | (11 – 15)). |
| Boden | 0 – 4 | ( 1 – 2) |

Erfindungsgemäß ist es besonders bevorzugt, daß der dem Weizenvollkornmehl zugrundeliegende Weizen einen Proteingehalt von mehr als 13 und vorzugsweise mehr als 13,5% i.T. besitzt und einen Sedimentationswert gemäß ICC-Standard Nr. 116 von mehr als 45 ml aufweist.

In der Regel beträgt der Anteil der Weizenschalenteile im erfindungsgemäßen Weizenvollkornmehl 15 bis 22 Gew.% und vorzugsweise etwa 20 Gew.%. Die typischen Eigenschaften von nach dem erfindungsgemäßen Verfahren erhaltenen und für die Herstellung des erfindungsgemäßen Weizenvollkornmehls geeigneten Grobanteilen (Weizenschalenteile) und Mehlanteilen sind in den beiden folgenden Tabellen anhand eines konkreten Beispiels angegeben.

| Grobanteile | % lftr. | % i. T. |
|---|---|---|
| $H_2O$ | 11,2 | – |
| Asche | 4,13 | 4,65 |
| Eiweiß | 13,75 | 15,5 |
| Stärke | 33,76 | 38,0 |
| Ballaststoffgehalt | 26,12 | 29,4 |

| Mehlanteile | % lftr. | % i.T. |
|---|---|---|
| $H_2O$ | 15,0 | – |
| Asche | 0,585 | 0,69 |
| Eiweiß | 10,8 | 12,7 |
| Stärke | 66,47 | 78,2 |

lftr. = lufttrocken

i.T. = in Trockensubstanz; Ballaststoffgehalt = unlösliche organische Ballaststoffe bestimmt nach der NDF-Methode.

Das durch Wiedervereinigung der Grob- und Mehlanteile erhaltene erfindungsgemäße Weizenvollkornmehl weist in der Regel folgende Siebanalyse * (bevorzugte Bereiche in Klammern) auf:

* Die angegebenen Bereiche beruhen auf Untersuchungen an Ascorbinsäure enthaltenden Vollkornmehlen (siehe unten)

5

| Maschenweite /um | % Rückstand | |
|---|---|---|
| 3150 | 0 - 0,7 | (0 - 0,3) |
| 1700 | 3 - 7 | (4 - 6) |
| 1000 | 5 - 15 | (9 - 11) |
| 500 | 10 - 40 | (15 - 25) |
| 300 | 20 - 45 | (35 - 42) |
| 200 | 10 - 30 | (15 - 25) |
| 100 | 1 - 8 | (2 - 5) |
| Boden | 0 - 2 | (0,1 - 0,5). |

Auffällig bei der Siebanalyse des erfindungsgemäßen Vollkornmehls ist, daß sie nicht unbedingt der Addition der Siebanalysen der Mehl- und Grobanteile unter Berücksichtigung der jeweiligen Mengen dieser beiden Anteile entspricht. Durch den Mischungsvorgang (z.B. einstündiges intensives Mischen in einer Mischmaschine) und auch durch den Zusatz von Ascorbinsäure (siehe unten) können sich nicht unerhebliche Veränderungen ergeben. Das Hektolitergewicht des erfindungsgemäßen Vollkornmehls beträgt 53 bis 63 kg und vorzugsweise 57 bis 59 kg . Besonders auffällig ist dabei, daß gemäß den bisherigen Untersuchungen das Hektolitergewicht des Vollkornmehls größer als das der Mehlanteile ist. Dies ist insofern überraschend, als man meinen sollte, daß das Vermischen der schwereren Mehlanteile mit den leichteren Grobanteilen zu einer Erniedrigung des Hektolitergewichts führt. Eine Erklärung für dieses Phänomen konnte bisher noch nicht gefunden werden. Eventuell ist die Ursache in der Methode der Bestimmung des Hektolitergewichtes zu suchen.

Im folgenden sind konkrete Siebanalysen eines erfindungsgemäßen Vollkornmehls sowie der erfindungsgemäß hergestellten Mehl- und Grobanteile angegeben. Die in der folgenden Tabelle enthaltenen Angaben stellen jeweils den Durchschnittswert aus fünf Messungen dar. Das Vollkornmehl enthielt 15,5 Gew.% Grobanteile und außerdem Ascorbinsäure (siehe unten).

| Siebanalysen | Vollkornmehl | Mehlanteile | Grobanteile |
|---|---|---|---|
| Maschenweite /um | % Rückstand | | |
| 3150 | 0,2 | - | 0,7 |
| 1700 | 5,0 | - | 44,9 |
| 1000 | 9,9 | - | 39,2 |
| 500 | 22,9 | 5,3 | 11,6 |
| 300 | 36,8 | 39,7 | 2,2 |
| 200 | 20,9 | 40,3 | 1,1 |
| 100 | 4,0 | 13,2 | 0,3 |
| Boden | 0,2 | 1,5 | - |
| Hektolitergew. kg | 58,0 | 57,0 | 20,4 |

Das erfindungsgemäße Weizenvollkornmehl wird bei der Herstellung von Brot in üblicher Weise eingesetzt. So ist es z.B. bekannt, daß Mehlbehandlungsmittel in Form von Ascorbinsäure bei der Herstellung von Vollkornmehlen überdosiert zugegeben werden. Während normalerweise 2 bis 3 g pro 100 kg Mehl üblich sind, werden bei Vollkornmehlen bis zu 7 g zugesetzt. Dies gilt auch für das erfindungsgemäße Weizenvollkornmehl.

Das erfindungsgemäße Weizenvollkornmehl kann für die Herstellung von verschiedensten Broten und anderen Backwaren eingesetzt werden und liefert neben ausgezeichneter Qualität die mit dem Einsatz von Vollkornmehl angestrebten Vorteile wie hohen Ballaststoffgehalt, verringerten physiologischen Brennwert etc. Besonders vorteilhaft machen sich die Eigenschaften des erfindungsgemäßen Weizenvollkornmehls jedoch bei der Toastbrotherstellung bemerkbar. Bei Verwendung des erfindungsgemäßen Weizenvollkornmehls wird sehr voluminöses und helles Toastbrot erhalten, das keinen Kleienachgeschmack aufweist und die erwünschte äußerliche Form besitzt, d.h. keine Einschnürungen zeigt. Weiterhin haben die Weizenschalenanteile keinen negativen Einfluß auf die Beschaffenheit der getoasteten Scheiben, d.h. die Textur ist auch nach dem Toasten so, daß die Weizenschalenteile beim Essen nicht in unangenehmer Form als harte Spelzen wahrgenommen werden.

Sehr gute Ergebnisse werden auch bei der Verwendung des erfindungsgemäßen Weizenvollkornmehls für die Herstellung von Grahambrot erzielt. Neben einem sehr guten Volumen besitzt das mit dem erfindungsgemäßen Weizenvollkornmehl hergestellte Grahambrot äußerst gute Frischhalteeigenschaften.

Alle in den Patentansprüchen und in der Beschreibung angegebenen Ballaststoffgehalte betreffen die unlöslichen organischen Ballaststoffe bestimmt nach der NDF-Methode. Das Hektolitergewicht wird ermittelt gemäß den "Tafeln zur Ermittlung des Hektolitergewichts aus den Angaben der eichfähigen Getreideprober mit Vorlaufkörper der Bauart 1938" der Physikalisch-Technischen Reichsanstalt aus dem Jahre 1940 (Verlag Deutsches Reichsgesetzbuch).

Die Ermittlung von Siebanalysen und Sedimentationswerten erfolgt gemäß den Angaben in Standard-Methoden für Getreide, Mehl und Brot, 6. erweiterte Auflage, Seiten 55 bis 57 bzw. Seiten 116 bis 119 (ICC-Standard Nr. 116). Schließlich sei der Vollständigkeit halber erwähnt, daß die Abkürzung i.T. in üblicher Weise "in Trockensubstanz" bedeutet.

Beispiel 1

85 Teile erfindungsgemäßes Weizenvollkornmehl, das sich aus 80% Mehlbestandteilen und 20% Weizenschalenteilen der oben angegebenen Spezifikation zusammensetzte, 5 Teile Roggenvollkorn versäuert gemäß Detmolder Einstufenführung (siehe z.B. Spicher/Stephan, Handbuch Sauerteig, Verlag BBV Wirtschaftsinformationen GmbH, Hamburg, 1982, Seiten 261 u. 265) und 10 Teile Weizenmehl (Type 550) werden mit 1 Teil Lecithin, 3 Teilen Markenbutter, 1 Teil Vollmilchpulver, 4 Teilen Hefe, 3 Teilen Zucker und 1,8 Teilen Salz in einem Hochgeschwindigkeitskneter zu einem Teig geknetet. Der erhaltene Teig wurde über einen Kammerteiler in üblicher Weise abgewogen, rundgewirkt, erhielt eine 5-minütige Zwischengare und wurde in einem Einschlagroller ausgewalzt und aufgerollt in 4 Teile geteilt. Diese 4 Teile wurden um 90° gedreht und automatisch in Formen abgelegt.

Die Endgare erfolgte in einem Gärschrank bei einer Temperatur von 35°C und einer relativen Luftfeuchtigkeit von 80% in einem Zeitraum von 50 Minuten. Danach wurden die Formen automatisch bedeckt und auf einem Durchlaufofen 30 Minuten gebacken. Nach dem Entdeckeln und Entkapseln der Brote aus den Formen erfolgte eine 90-minütige Kühlung auf Bändern. Geschnitten wurde das Brot danach auf einer Bandschneidemaschine, einem sogenannten Slicer. Anschließend daran wurde es wahlweise in Beutel verpackt oder in Folie mit Seitenfalzung eingeschlagen.

Es schloß sich dann ein Pasteurisier-Prozeß zur Haltbarmachung des Brotes an, wobei eine Kerntemperatur von oberhalb 65°C erreicht werden muß, um Schimmelsporen so nachhaltig zu schädigen, daß ein Wachstum innerhalb des Mindesthaltbarkeitszeitraums und einer ausreichenden Zeit darüber hinaus nicht möglich ist.

Das auf diese Weise hergestellte Toastbrot besaß eine verhältnismäßig helle Farbe und war genau so voluminös wie handelsübliche Toastbrote. Dieses Brot stimmte praktisch in allen wesentlichen Merkmalen mit einem im Handel befindlichen Spitzentoastbrot überein. Abgesehen von erhöhten Vitamin- und Mineraliengehalten bestand der grundlegende Unterschied nur in dem deutlich erhöhten Ballaststoffgehalt, der bei dem im Handel befindlichen Spitzentoastbrot 4,0% i.T. und bei dem das erfindungsgemäße Weizenvollkornmehl enthaltenen Toastbrot 6,4% i.T. betrug. Dies macht deutlich, daß mit dem erfindungsgemäßen Weizenvollkornmehl ernährungsphysiologisch wertvolles Toastbrot hergestellt werden kann, das in allen Belangen bekannten Toastbroten von Spitzenqualität entspricht.

Beispiel 2

Es wurden 4 verschiedene Toastbrotsorten in Augenschein genommen und verköstigt. Bei dem ersten Toastbrot handelte es sich um ein Toastbrot, das in üblicher Weise, aber unter Verwendung des erfindungsgemäßen Weizenvollkornmehls hergestellt worden war. Für die Herstellung des zweiten Toastbrotes wurde ein voll durchgemahlenes Weizenvollkornmehl eingesetzt. Dieses voll durchgemahlene Weizenvollkornmehl wurde im Wege der Passagenmüllerei erhalten, d.h. die Schalenteile wurden im Laufe der Vermahlung zwischenzeitlich abgetrennt und separat zerkleinert (vgl. die oben genannte Literaturstelle Getreide, Mehl und Brot). Für die Herstellung des dritten Toastbrotes wurde ebenfalls ein voll durchgemahlenes Weizenvollkornmehl eingesetzt, das allerdings mit Hilfe einer Hammermühle hergestellt worden war.

Bei dem vierten Toastbrot handelte es sich um ein Handelsprodukt auf Basis von Weizenvollkornmehl, Roggenvollkornschrot, Wasser, Margarine, Zucker, Salz, Hefe und Backmittel. Der Ballaststoffgehalt dieser Handelsware lag bei 4,8%.

Vom Aussehen her machte das mit dem erfindungsgemäßen Weizenvollkornmehl hergestellte Brot den weitaus besten Eindruck. Es war voluminöser und heller als alle anderen Vergleichsbrote. Außerdem war auch die äußere Form ohne Fehler, d.h. das Brot war an keiner Stelle zusammengefallen oder zeigte Einschnürungen.

Das zweite Toastbrot war zwar auch vergleichbar voluminös, aber deutlich dunkler. Außerdem besaß es keinerlei Vollkorn-charakter mehr.

Mit dem in der Hammermühle erzeugten Weizenvollkornmehl wurde ein in sich zusammengefallenes Brot von dunkler Farbe und sehr grober Textur erhalten. Dieses Brot wäre nicht verkaufsfähig.

Das vierte, im Handel befindliche Toastbrot war weniger voluminös als die ersten beiden Toastbrote, besaß ebenfalls eine verhältnismäßig dunkle Farbe und zeigte darüber hinaus deutliche Einschnürungen (Taillenbildung). Außerdem war es hinsichtlich seiner Textur sehr viel gröber als die beiden ersten Toastbrote, aber etwas weniger grob als das dritte Toastbrot.

Geschmacklich war das mit dem erfindungsgemäßen Weizenvollkornmehl hergestellte Toastbrot den drei Vergleichstoastbroten insofern deutlich überlegen, als es als einziges keinen Kleienachgeschmack besaß. Trotz des erhaltenen Vollkorncharakters ließ sich das mit dem erfindungsgemäßen Weizenvollkornmehl hergestellte Toastbrot im Unterschied zum dritten und vierten Toastbrot auch nach dem Toasten angenehm kauen.

**Patentansprüche**
**Patentansprüche für folgende Vertragsstaaten : BE, CH, DE, ES, FR, GB, IT, LI, LU, NL, SE.**

1. Weizenvollkornmehl aus Mehlanteilen mit einer im wesentlichen üblichen Typenmehlen entsprechenden Beschaffenheit und Grobanteilen, dadurch gekennzeichnet, daß die Grobanteile aus Weizenschalenteilen mit anhaftenden Mehlbestandteilen, vornehmlich aus den Teilen der Aleuronschicht, bestehen, 15 bis 22 Gew.% des Weizenvollkornmehles ausmachen, einen Ballaststoffgehalt von 28 bis 30,5% i.T., ein spezifisches Gewicht von 0,15 bis 0,25 g/ml und folgende Siebanalyse aufweisen:

| Maschenweite /um | % Rückstand | |
|---|---|---|
| 3150 | 0 | – 3 |
| 1700 | 35 | – 55 |
| 1000 | 30 | – 50 |
| 500 | 8 | – 15 |
| 300 | 1 | – 4 |
| 200 | 0,3 | – 2,5 |
| 100 | 1. | |

2. Weizenvollkornmehl nach Anspruch 1, dadurch gekennzeichnet, daß der zugrundeliegende Weizen einen Proteingehalt von mehr als 13 und vorzugsweise mehr als 13,5% i.T. besitzt und einen Sedimentationswert von mehr als 45 ml aufweist.

3. Weizenvollkornmehl nach Anspruch 1 oder 2, dadurch gekennzeichnet, daß die Weizenschalenteile ein spezifisches Gewicht von 0,19 bis 0,13 g/ml, einen Aschegehalt von 4 bis 5% i.T. und folgende Siebanalyse (noch bevorzugtere Bereiche in Klammern) aufweisen:

| Maschenweite /um | % Rückstand | | | |
|---|---|---|---|---|
| 3150 | 0 − 1 | ( 0,6 − 0,9) | | |
| 1700 | 40 − 50 | (44 − 48) | | |
| 1000 | 35 − 45 | (36 − 40) | | |
| 500 | 9 − 14 | (10 − 13) | | |
| 300 | 1,5 − 3,5 | ( 3 − 3) | | |
| 200 | 0,5 − 2,0 | ( 0,8 − 1,5) | | |
| 100 | 0,1 − 0,6 | ( 0,2 − 0,4) | | |

4. Weizenvollkornmehl nach einem der Ansprüche 1 bis 3, dadurch gekennzeichnet, daß der Mehlanteil einen gegenüber einem entsprechenden Typenmehl um mindestens 1% i.T. verringerten Eiweißgehalt besitzt.

5. Weizenvollkornmehl nach einem der Ansprüche 1 bis 4, dadurch gekennzeichnet, daß der Mehlanteil ein spezifisches Gewicht von 0,52 bis 0,62 g/ml, einen Aschegehalt von 0,6 bis 0,8% i.T. und folgende Siebanalyse (bevorzugte Bereiche in Klammern) aufweist:

| Maschenweite /um | % Rückstand | |
|---|---|---|
| 1000 | 0 − 0,5 | ( 0 − 0,2) |
| 500 | 1 − 10 | ( 3 − 8) |
| 300 | 32 − 47 | (36 − 42) |
| 200 | 32 − 47 | (36 − 42) |
| 100 | 8 − 18 | (11 − 15)). |
| Boden | 0 − 4 | ( 1 − 2) |

6. Weizenvollkornmehl nach einem der Ansprüche 1 bis 5, dadurch gekennzeichnet, daß es ein höheres Hektolitergewicht als der Mehlanteil besitzt.

7. Verfahren zur Herstellung von Weizenvollkornmehl, bei dem Weizen oder eine Weizenmischung in üblicher Weise wie bei der Herstellung eines Typenmehls vermahlen wird, anfallende Grobanteile abgetrennt werden und das erhaltene helle Mehl und die abgetrennten Grobanteile wieder zusammengeführt werden, dadurch gekennzeichnet, daß man die Grobanteile zu einem solchen Zeitpunkt abtrennt, daß sie aus Weizenschalenteilen mit anhaftenden Mehlbestandteilen, vornehmlich aus den Teilen der Aleuronschicht, bestehen, einen Ballaststoffgehalt von 28 bis 30,5% i.T., ein spezifisches Gewicht von 0,15 bis 0,25 g/ml und folgende Siebanalyse aufweisen:

| Maschenweite /um | % Rückstand |
|---|---|
| 3150 | 0 - 3 |
| 1700 | 35 - 55 |
| 1000 | 30 - 50 |
| 500 | 8 - 15 |
| 300 | 1 - 4 |
| 200 | 0,3 - 2,5 |
| 100 | 1. |

**8.** Verfahren nach Anspruch 7, dadurch gekennzeichnet, daß man Weizen mit einem Proteingehalt von mehr als 13 und vorzugsweise mehr als 13,5% i.T. und einem Sedimentationswert von mehr als 45 ml verwendet.

**9.** Verfahren nach Anspruch 7 oder 8, dadurch gekennzeichent, daß man die Grobanteile zu einem solchen Zeitpunkt abtrennt, daß die Weizenschalenteile ein spezifisches Gewicht von 0,19 bis 0,23 g/ml, einen Aschegehalt von 4 bis 5% i.T. und folgende Siebanalysen (noch bevorzugtere Bereiche in Klammern) besitzen:

| Maschenweite /um | % Rückstand | |
|---|---|---|
| 3150 | 0 - 1 | ( 0,6 - 0,9) |
| 1700 | 40 - 50 | (44 - 48) |
| 1000 | 35 - 45 | (36 - 40) |
| 500 | 9 - 14 | (10 - 13) |
| 300 | 1,5 - 3,5 | ( 3 - 3) |
| 200 | 0,5 - 2,0 | ( 0,8 - 1,5) |
| 100 | 0,1 - 0,6 | ( 0,2 - 0,4) |

**10.** Verfahren nach einem der Ansprüche 7 bis 9, dadurch gekennzeichnet, daß man den Mehlanteil nach Abtrennung der Grobanteile in üblicher Weise zu einem hellen Mehl mit einem spezifischen Gewicht von 0,52 bis 0,62 g/ml, einem Aschegehalt von 0,6 bis 0,8% i.T. und folgender Siebanalyse (bevorzugte Bereiche in Klammern) vermahlt:

| Maschenweite /um | % Rückstand | |
|---|---|---|
| 1000 | 0 - 0,5 | ( 0 - 0,2) |
| 500 | 1 - 10 | ( 3 - 8) |
| 300 | 32 - 47 | (36 - 42) |
| 200 | 32 - 47 | (36 - 42) |
| 100 | 8 - 18 | (11 - 15)). |
| Boden | 0 - 4 | ( 1 - 2) |

**11.** Verfahren nach einem der Ansprüche 7 bis 10, dadurch gekennzeichnet, daß man für das Vermahlen Walzenstühle verwendet.

**12.** Verwendung des Weizenvollkornmehls gemäß einem der Ansprüche 1 bis 6 oder hergestellt nach dem Verfahren gemäß einem der Patentansprüche 7 bis 11 zur Herstellung von Toast- oder Grahambrot.

**Patentansprüche für folgenden Vertragsstaat: AT**

**1.** Verfahren zur Herstellung von Weizenvollkornmehl, bei dem Weizen oder eine Weizenmischung in üblicher Weise wie bei der Herstellung eines Typenmehls vermahlen wird, anfallende Grobanteile abgetrennt werden und das erhaltene helle Mehl und die abgetrennten Grobanteile wieder zusammengeführt werden, dadurch gekennzeichnet, daß man die Grobanteile zu einem solchen Zeitpunkt abtrennt, daß sie aus Weizenschalenteilen mit anhaftenden Mehlbestandteilen, vornehmlich aus den Teilen der Aleuronschicht, bestehen, einen Ballaststoffgehalt von 28 bis 30,5% i.T., ein spezifisches Gewicht von 0,15 bis 0,25 g/ml und folgende Siebanalyse aufweisen:

| Maschenweite /um | % Rückstand | |
|---|---|---|
| 3150 | 0 | – 3 |
| 1700 | 35 | – 55 |
| 1000 | 30 | – 50 |
| 500 | 8 | – 15 |
| 300 | 1 | – 4 |
| 200 | 0,3 | – 2,5 |
| 100 | 1. | |

**2.** Verfahren nach Anspruch 1, dadurch gekennzeichnet, daß man Weizen mit einem Proteingehalt von mehr als 13 und vorzugsweise mehr als 13,5% i.T. und einem Sedimentationswert von mehr als 45 ml verwendet.

**3.** Verfahren nach Anspruch 1 oder 2, dadurch gekennzeichnet, daß man die Grobanteile zu einem solchen Zeitpunkt abtrennt, daß die Weizenschalenteile ein spezifisches Gewicht von 0,19 bis 0,23 g/ml, einen Aschegehalt von 4 bis 5% i.T. und folgende Siebanalysen (noch bevorzugtere Bereiche in Klammern) besitzen:

| Maschenweite /um | % Rückstand | | | | |
|---|---|---|---|---|---|
| 3150 | 0 | – 1 | ( 0,6 | – | 0,9) |
| 1700 | 40 | – 50 | (44 | – | 48) |
| 1000 | 35 | – 45 | (36 | – | 40) |
| 500 | 9 | – 14 | (10 | – | 13) |
| 300 | 1,5 | – 3,5 | ( 3 | – | 3) |
| 200 | 0,5 | – 2,0 | ( 0,8 | – | 1,5) |
| 100 | 0,1 | – 0,6 | ( 0,2 | – | 0,4) |

**4.** Verfahren nach einem der Ansprüche 1 bis 3, dadurch gekennzeichnet, daß man den Mehlanteil nach Abtrennung der Grobanteile in üblicher Weise zu einem hellen Mehl mit einem spezifischen Gewicht von 0,52 bis 0,62 g/ml, einem Aschegehalt von 0,6 bis 0,8% i.T. und folgender Siebanalyse (bevorzugte Bereiche in Klammern) vermahlt:

| Maschenweite /um | % Rückstand | |
|---|---|---|
| 1000 | 0 – 0,5 | ( 0 – 0,2) |
| 500 | 1 – 10 | ( 3 – 8) |
| 300 | 32 – 47 | (36 – 42) |
| 200 | 32 – 47 | (36 – 42) |
| 100 | 8 – 18 | (11 – 15)). |
| Boden | 0 – 4 | ( 1 – 2) |

5. Verfahren nach einem der Ansprüche 1 bis 4, dadurch gekennzeichnet, daß man für das Vermahlen Walzenstühle verwendet.

6. Verwendung des Weizenvollkornmehls hergestellt nach dem Verfahren gemäß einem der Patentansprüche 1 bis 5 zur Herstellung von Toast- oder Grahambrot.

**Claims**
**Claims for the following Contracting States : BE, CH, DE, ES, FR, GB, IT, LI, LU, NL, SE.**

1. Whole wheatmeal flour comprising flour portions with a composition essentially corresponding to usual types of flour and coarse portions, characterized in that the coarse portions comprise wheat husk parts with adhering flour components, predominantly from the parts of the aleurone layer, constitute 15 to 22 wt-% of the whole wheatmeal flour, have a roughage content of 28 to 30.5 % d.m., a specific weight of 0.15 to 0.25 g/ml and the following sieve analysis:

| Mesh aperture μm | % Residue | | |
|---|---|---|---|
| 3150 | 0 | – | 3 |
| 1700 | 35 | – | 55 |
| 1000 | 30 | – | 50 |
| 500 | 8 | – | 15 |
| 300 | 1 | – | 4 |
| 200 | 0.3 | – | 2.5 |
| 100 | 1. | | |

2. Whole wheatmeal flour according to claim 1, characterized in that the basic wheat has a protein content of more than 13 and preferably more than 13 and preferably more than 13.5 % d.m. and has a sedimentation value of more than 45 ml.

3. Whole wheatmeal flour according to claim 1 or 2, characterized in that the wheat husk parts have a specific weight of 0.19 to 0.13 g/ml, an ash content of 4 to 5 % d.m. and the following sieve analysis (particularly preferred ranges in brackets):

| Mesh aperture μm | % Residue | | | | | |
|---|---|---|---|---|---|---|
| 3150 | 0 | – | 1 | ( 0.6 – | 0.9) |
| 1700 | 40 | – | 50 | (44 – | 48) |
| 1000 | 35 | – | 45 | (36 – | 40) |
| 500 | 9 | – | 14 | (10 – | 13) |
| 300 | 1.5 – | 3.5 | ( 3 – | 3) |
| 200 | 0.5 – | 2.0 | ( 0.8 – | 1.5) |
| 100 | 0.1 – | 0.6 | ( 0.2 – | 0.4) |

4. Whole wheatmeal flour according to one of claims 1 to 3, characterized in that the flour portion has a protein content reduced by at least 1 % d.m. compared to a corresponding graded flour.

5. Whole wheatmeal flour according to one of claims 1 to 4, characterized in that the flour portion has a specific weight of 0.52 to 0.62 g/ml, an ash content of 0.6 to 0.8 % d.m. and the following sieve analysis (preferred ranges in brackets):

| Mesh aperture μm | % Residue | | | | | |
|---|---|---|---|---|---|---|
| 1000 | 0 | – | 0.5 | ( 0 – | 0.2) |
| 500 | 1 | – | 10 | ( 3 – | 8) |
| 300 | 32 | – | 47 | (36 – | 42) |
| 200 | 32 | – | 47 | (36 – | 42) |
| 100 | 8 | – | 18 | (11 – | 15) |
| Bottom | 0 | – | 4 | ( 1 – | 2). |

6. Whole wheatmeal flour according to one of claims 1 to 5, characterized in that it has a higher hectolitre weight than the flour portion.

7. Process for producing whole wheatmeal flour in which wheat or a wheat mixture is milled in the usual way as for producing a graded flour, coarse parts occurring being separated and the obtained light flour and the separated coarse portions being brought together again, characterized in that the coarse portions are separated until they comprise wheat husk parts with adhering flour components, predominantly from the parts of the aleurone layer, have a roughage content of 28 to 30.5 % d.m., a specific weight of 0.15 to 0.25 g/ml and following the sieve analysis:

| Mesh aperture μm | % Residue | | |
|---|---|---|---|
| 3150 | 0 | – | 3 |
| 1700 | 35 | – | 55 |
| 1000 | 30 | – | 50 |
| 500 | 8 | – | 15 |
| 300 | 1 | – | 4 |
| 200 | 0.3 | – | 2.5 |
| 100 | 1. | | |

8. Process according to claim 7, characterized in that wheat with a protein content of more than 13 and preferably more than 13.5 % d.m. and a sedimentation value of more than 45 ml is used.

9. Process according to claim 7 or 8, characterized in that the coarse portions are separated until the wheat husk parts have a specific weight of 0.19 to 0.23 g/ml, an ash content of 4 to 5% d.m. and the following sieve analysis (more preferred ranges in brackets):

| Mesh aperture μm | % Residue | | | | | |
|---|---|---|---|---|---|---|
| 3150 | 0 | – | 1 | ( 0.6 | – | 0.9) |
| 1700 | 40 | – | 50 | (44 | – | 48) |
| 1000 | 35 | – | 45 | (36 | – | 40) |
| 500 | 9 | – | 14 | (10 | – | 13) |
| 300 | 1.5 | – | 3.5 | ( 3 | – | 3) |
| 200 | 0.5 | – | 2.0 | ( 0.8 | – | 1.5) |
| 100 | 0.1 | – | 0.6 | ( 0.2 | – | 0.4) |

10. Process according to one of claims 7 to 9, characterized in that, after separation of the coarse portions, the flour portion is milled in the usual way to a light flour with a specific weight of 0.52 to 0.62 g/ml, an ash content of 0.6 to 0.8 % d.m. and the following sieve analysis (preferred ranges in brackets):

```
Mesh aperture µm          % Residue

   1000                 0   -    0.5 ( 0   -    0.2)

    500                 1   -    10  ( 3   -    8 )

    300                32   -    47  (36   -    42)

    200                32   -    47  (36   -    42)

    100                 8   -    18  (11   -    15)

   Bottom              0   -    4   ( 1   -    2 ).
```

11. Process according to one of claims 7 to 10, characterized in that cylinder mills are used for milling.

12. Use of the whole wheatmeal flour according to one of claims 1 to 6 or produced using the process according to one of patent claims 7 to 11 to produce toast bread or graham bread (a type of wholemeal bread).

**Claims for the following Contracting State : AT**

1. Process for producing whole wheatmeal flour in which wheat or a wheat mixture is milled in the usual way as for producing a graded flour, coarse parts occurring being separated and the obtained light flour and the separated coarse portions being brought together again, characterized in that the coarse portions are separated until they comprise wheat husk parts with adhering flour components, predominantly from the parts of the aleurone layer, have a roughage content of 28 to 30.5 % d.m., a specific weight of 0.15 to 0.25 g/ml and following the sieve analysis:

```
Mesh aperture µm          % Residue

   3150                 0   -    3

   1700                35   -    55

   1000                30   -    50

    500                 8   -    15

    300                 1   -    4

    200                 0.3 -    2.5

    100                 1.
```

2. Process according to claim 1, characterized in that wheat with a protein content of more than 13 and preferably more than 13.5 % d.m. and a sedimentation value of more than 45 ml is used.

3. Process according to claim 1 or 2, characterized in that the coarse portions are separated until the wheat husk parts have a specific weight of 0.19 to 0.23 g/ml, an ash content of 4 to 5% d.m. and the following sieve analysis (more preferred ranges in brackets):

| Mesh aperture µm | % Residue | | | | | |
|---|---|---|---|---|---|---|
| 3150 | 0 | – | 1 | ( 0.6 | – | 0.9) |
| 1700 | 40 | – | 50 | (44 | – | 48) |
| 1000 | 35 | – | 45 | (36 | – | 40) |
| 500 | 9 | – | 14 | (10 | – | 13) |
| 300 | 1.5 | – | 3.5 | ( 3 | – | 3) |
| 200 | 0.5 | – | 2.0 | ( 0.8 | – | 1.5) |
| 100 | 0.1 | – | 0.6 | ( 0.2 | – | 0.4) |

4. Process according to one of claims 1 to 3, characterized in that, after separation of the coarse portions, the flour portion is milled in the usual way to a light flour with a specific weight of 0.52 to 0.62 g/ml, an ash content of 0.6 to 0.8 % d.m. and the following sieve analysis (preferred ranges in brackets):

| Mesh aperture µm | % Residue | | | | | |
|---|---|---|---|---|---|---|
| 1000 | 0 | – | 0.5 | ( 0 | – | 0.2) |
| 500 | 1 | – | 10 | ( 3 | – | 8) |
| 300 | 32 | – | 47 | (36 | – | 42) |
| 200 | 32 | – | 47 | (36 | – | 42) |
| 100 | 8 | – | 18 | (11 | – | 15) |
| Bottom | 0 | – | 4 | ( 1 | – | 2). |

5. Process according to one of claims 1 to 4, characterized in that cylinder mills are used for milling.

6. Use of the whole wheatmeal flour produced using the process according to one of patent claims 1 to 5 to produce toast bread or graham bread (a type of wholemeal bread).

**Revendications**
**Revendications pour les Etats contractants suivants : BE, CH, DE, ES, FR, GB, IT, LI, LU, NL, SE.**

1. Farine complète de blé constituée d'éléments farineux ayant une structure et des constituants grossiers correspondant pour l'essentiel à des farines de type usuel, caractérisée en ce que les constituants grossiers sont composés de parties de son ayant des constituants farineux adhérents, provenant essentiellement des parties de la couche d'aleurone, représentent, de 15 à 22% en poids de la farine complète de blé et présentent une teneur en matières inertes de 28 à 30,5%, en parties, un poids spécifique de 0,15 à 0,25 g/ml et l'analyse granulométrique suivante :

16

| ouverture de maille (µm) | % de refus de tamisage | |
|---|---|---|
| 3150 | O | 3 |
| 1700 | 35 | 55 |
| 1000 | 30 | 50 |
| 500 | 8 | 15 |
| 300 | 1 | 4 |
| 200 | 0,3 | 2,5 |
| 100 | 1. | |

2. Farine complète de blé selon la revendication 1, caractérisée en ce que le blé de base possède une teneur en protéines de plus de 13 et de préférence de plus de 13,5%, en parties, et présente une valeur de sédimentation de plus de 45 ml.

3. Farine complète de blé selon la revendication 1 ou 2, caractérisée en ce que les parties de son présentent un poids spécifique de 0,19 à 0,13 g/ml, une teneur en cendres de 4 à 5% en parties et l'analyse granulométrique suivante, (des plages préférées étant indiquées entre parenthèses) :

| ouverture de maille (µm) | % de refus de tamisage | | | |
|---|---|---|---|---|
| 3150 | O | 1 | ( 0,6 | 0,9 ) |
| 1700 | 40 | 50 | ( 44 | 48 ) |
| 1000 | 35 | 45 | ( 36 | 40 ) |
| 500 | 9 | 14 | ( 10 | 13 ) |
| 300 | 1,5 | 3,5 | ( 3 | 3 ) |
| 200 | 0,5 | 2,0 | ( 0,8 | 1,5 ) |
| 100 | 0,1 | 0,6 | ( 0,2 | 0,4 ) |

4. Farine complète de blé selon l'une des revendications 1 à 3, caractérisée en ce que l'élément farineux possède une teneur en albumine d'au moins 1% en partie inférieure à celle d'une farine de type usuel correspondante.

5. Farine complète de blé selon l'une des revendications 1 à 4, caractérisée en ce que l'élément farineux présente un poids spécifique de 0,52 à 0,62 g/ml, une teneur en cendre de 0,6 à 0,8%, en parties, et l'analyse granulométrique suivante (des plages préférées étant indiquées entre parenthèses) :

| Ouverture de maille<br>( μm) | % de refus de tamisage | |
|---|---|---|
| 1000 | O  -  O,5 | ( O  -  O,2) |
| 500 | 1  -  10 | ( 3  -  8) |
| 300 | 32  -  47 | (36  -  42) |
| 200 | 32  -  47 | (36  -  42) |
| 100 | 8  -  18 | (11  -  15)). |
| minimum | O  -  4 | ( 1  -  2) |

**6.** Farine complète de blé selon l'une des revendications 1 à 5, caractérisée en ce qu'elle possède un poids à l'hectolitre plus élevé que l'élément farineux.

**7.** Procédé de fabrication de farine complète de blé, dans lequel du blé ou un mélange de blés sont moulus de manière usuelle pour la fabrication de farines de type usuel, les constituants grossiers résultant sont séparés et la farine claire obtenue et les constituants grossiers séparés de nouveau rassemblés, caractérisé en ce que l'on sépare les constituants grossiers à un moment prédéterminé tel qu'ils soient composés de parties de son avec des constituants farineux adhérents, de préférence provenant des parties de la couche d'aleurone, et qu'ils présentent une teneur en matières inertes de 28 à 30,5%, en parties, un poids spécifique de 0,15 à 0,25 g/ml et l'analyse granulométrique suivante :

| ouverture de maille<br>( μm) | % de refus de tamisage |
|---|---|
| 3150 | O  -  3 |
| 1700 | 35  -  55 |
| 1000 | 30  -  50 |
| 500 | 8  -  15 |
| 300 | 1  _  4 |
| 200 | O,3  -  2,5 |
| 100 | 1. |

**8.** Procédé selon la revendication 7, caractérisé en ce que l'on utilise du blé ayant une teneur en protéines de plus de 13 et de préférence de plus de 13,5%, en parties, et une valeur de sédimentation de plus de 45 ml.

**9.** Procédé selon la revendication 7 ou 8, caractérisé en ce que l'on sépare les constituants grossiers à un moment prédéterminé tel que les parties de son possèdent un poids spécifique de 0,19 à 0,23 g/ml, une teneur en cendres de 4 à 5% en parties, et l'analyse granulométrique suivante (des plages préférées étant indiquées entre parenthèses) :

| ouverture de maille (μm) | % de refus de tamisage | | | |
|---|---|---|---|---|
| 3150 | 0 – 1 | ( 0,6 – | 0,9 ) |
| 1700 | 40 – 50 | ( 44 – | 48 ) |
| 1000 | 35 – 45 | ( 36 – | 40 ) |
| 500 | 9 – 14 | ( 10 – | 13 ) |
| 300 | 1,5 – 3,5 | ( 3 – | 3 ) |
| 200 | 0,5 – 2,0 | ( 0,8 – | 1,5 ) |
| 100 | 0,1 – 0,6 | ( 0,2 – | 0,4 ) |

10. Procédé selon l'une des revendications 7 à 9, caractérisé en ce que l'on moud l'élément farineux après séparation des constituants grossiers de manière usuelle en une farine claire ayant un poids spécifique de 0,52 à 0,62 g/ml, une teneur en cendre de 0,6 à 0,8%, en parties, et l'analyse granulométrique suivante (des plages préférées étant indiquées entre parenthèses) :

| ouverture de maille ( μm) | % de refus de tamisage | | | |
|---|---|---|---|---|
| 1000 | 0 – 0,5 | ( 0 – | 0,2 ) |
| 500 | 1 – 10 | ( 3 – | 8 ) . |
| 300 | 32 – 47 | ( 36 – | 42 ) |
| 200 | 32 – 47 | ( 36 – | 42 ) |
| 100 | 8 – 18 | ( 11 – | 15 ) ). |
| minimum | 0 – 4 | ( 1 – | 2 ) |

11. Procédé selon l'une des revendications 7 à 10, caractérisé en ce que l'on utilise pour la mouture un moulin à cylindres.

12. Utilisation de la farine complète de blé selon l'une des revendications 1 à 6, fabriquée selon le procédé conforme à l'une des revendications 7 à 11, pour la fabrication de pain pour toasts ou de pain de Graham.

**Revendications pour l'Etat contractant suivante : AT**

1. Procédé de fabrication de farine complète de blé, dans lequel du blé ou un mélange de blés sont moulus de manière usuelle pour la fabrication de farines de type usuel, les constituants grossiers résultant sont séparés et la farine claire obtenue et les constituants grossiers séparés de nouveau rassemblés, caractérisé en ce que l'on sépare les constituants grossiers à un moment prédéterminé tel qu'ils soient composés de parties de son avec des constituants farineux adhérents, de préférence provenant des parties de la couche d'aleurone, et qu'ils présentent une teneur en matières inertes de 28 à 30,5%, en parties, un poids spécifique de 0,15 à 0,25 g/ml et l'analyse granulométrique suivante :

| ouverture de maille (µm) | % de refus de tamisage |
|---|---|
| 3150 | 0 - 3 |
| 1700 | 35 - 55 |
| 1000 | 30 - 50 |
| 500 | 8 - 15 |
| 300 | 1 - 4 |
| 200 | 0,3 - 2,5 |
| 100 | 1. |

2. Procédé selon la revendication 1, caractérisé en ce que l'on utilise du blé ayant une teneur en protéines de plus de 13 et de préférence de plus de 13,5%, en parties, et une valeur de sédimentation de plus de 45 ml.

3. Procédé selon la revendication 1 ou 2, caractérisé en ce que l'on sépare les constituants grossiers à un moment prédéterminé tel que les parties de son possèdent un poids spécifique de 0,19 à 0,23 g/ml, une teneur en cendres de 4 à 5% en parties et l'analyse granulométrique suivante (des plages étant indiquées entre parenthèses) :

| ouverture de maille (µm) | % de refus de tamisage | |
|---|---|---|
| 3150 | 0 - 1 | ( 0,6 - 0,9) |
| 1700 | 40 - 50 | (44 - 48) |
| 1000 | 35 - 45 | (36 - 40) |
| 500 | 9 - 14 | (10 - 13) |
| 300 | 1,5 - 3,5 | ( 3 - 3) |
| 200 | 0,5 - 2,0 | ( 0,8 - 1,5) |
| 100 | 0,1 - 0,6 | ( 0,2 - 0,4) |

4. Procédé selon l'une des revendications 1 à 3, caractérisé en ce que l'on moud l'élément farineux après séparation des constituants grossiers de manière usuelle en une farine claire ayant un poids spécifique de 0,52 à 0,62 g/ml, une teneur en cendres de 0,6 à 0,8% en parties, et l'analyse granulométrique suivante (des plages préférées étant indiquées entre parenthèses) :

| ouverture de maille (µ m) | % de refus de tamisage | | | | |
|---|---|---|---|---|---|
| 1000 | 0 | – | 0,5 | ( 0 – 0,2) |
| 500 | 1 | – | 10 | ( 3 – 8) |
| 300 | 32 | – | 47 | (36 – 42) |
| 200 | 32 | – | 47 | (36 – 42) |
| 100 | 8 | – | 18 | (11 – 15)). |
| minimum | 0 | – | 4 | ( 1 – 2) |

5. Procédé selon l'une des revendications 1 à 4, caractérise en ce que l'on utilise pour la mouture un moulin à cylindres.

6. Utilisation de farine complète de blé préparée selon le procédé de l'une quelconque des revendications 1 à 5, pour la préparation de pain pour toasts ou pain de Graham.